# EUROPEAN PATENT APPLICATION

(11) **EP 1 262 892 A2**
(43) Date of publication of application: **04.12.2002**
(21) Application number: 02011733.9
(22) Date of filing: 27.05.2002
(51) Int. Cl.: G06F 17/60

(54) **System and method for managing work files with business processes**

(30) Priority: 31.05.2001 IT TO20010516
(71) Applicant: Telecom Italia Lab S.p.A., 10148 Torino (IT)
(72) Inventor: Marchetti, Marco, 10148 Torino (IT); Morgante, Thomas, 10148 Torino (IT); Mercinelli, Marco, 10148 Torino (IT)
(74) Representative: Casuccio, Carlo

(57) **Abstract**

The present invention relates to a system and method for analysing, reviewing and controlling business processes or flows. The system (10) and method allow to analyse and manage work files both with new (informal) flows and with consolidated (formal) flows by means of a single integrated tool, accessible from remote terminals (12) and/or local terminals (18) with no need to employ diversified systems and methods. The system and method allow, in particular, to introduce tools for the analysis, control and management of business flows in context of limited dimensions and/or high flow variability.

## Description

### Technical Field

The present invention relates to a system and correspondent method for managing work files with business processes or flows. In particular, the present invention relates to a system and method for the analysis, revision and control of business processes.

### Background Art

Business process analysis tools are known in the art. For example, tools called BPR (acronym of Business Process Re-engineering) are known which allow to simulate, upon receiving requests for services by customers within or outside the company, the effects of a determined business flow.
In particular, said BPR tools allow to compute, by means of simulation, business process completion times, bottlenecks, critical items, for a determined business flow described, for instance, graphically, and for scenarios constituted by workloads, customer requests, variations to requested processes.

Also known in the art are so-called "Work Flow" tools that allow to implement and control corporate document or process flows.
For example, tools are known that, given a determined corporate organisation chart and a determined type of work flow, allow to synchronise and control the corporate process providing, for instance, statistical or punctual information on the flow of the work itself.

A first technical problem of the prior art is that the BPR and Work Flow tools are mutually distinct, not integrated and that, therefore, constitute a heavy cost, both in terms of work and in financial terms for companies.
A company that intends to synchronise and control internal processes is forced, in accordance with the prior art, to obtain multiple, mutually different, tools, and to transfer data and information from the BPR tools to the Work Flow tools.

A second problem, also linked to the fact that the BPR tools are different and distinct from the Work Flow tools, consists of the fact that each procedural variation inside the company entails, as a necessary consequence, a recycling both of the BPR tools and of the Work Flow tools.
Because of this second problem, in corporate contexts where internal flows are highly variable the prior art approach is practically inapplicable.

An additional technical problem consists of the fact that both BPR tools and Work Flow tools can be applied to so-called "formal" flows, i.e. to encoded flows, whilst they cannot be applied to so-called "informal" flows, i.e. to non encoded flows.
Because of this problem, the prior art is not able to simulate and manage "informal" flows and requires their previous encoding, which, naturally, in contexts of high variability, entails unacceptable costs.

### Disclosure of the Invention

The aim of the present invention is the implementation of a system and method that enable to overcome the limits of the prior art.

The system and method described in the claims achieve said aim.

In particular, the system according to the invention achieves said aims because it is characterised by a single tool able both to analyse and to implement and control business flows.

According to an additional characteristic of the present invention, the system and method allow to analyse, implement and control both "formal" and "informal" flows.
Moreover, the system and method, thanks to their high internal flexibility, allow to manage business flows in contexts of high variability without requiring formalisation and analysis recycling operations.

### Brief Description of Drawings

This and other characteristics of the present invention shall become readily apparent from the following description of a preferred embodiment, provided purely by way of nonlimiting example with the aid of the accompanying drawings, in which:
Fig. 1 shows a synthetic diagram of the system according to the invention;
Fig. 2 shows a block diagram of modules and archives of the system of Fig. 1; and
Fig. 3 shows a flowchart of the method according to the invention.

### Best mode for Carrying Out the Invention

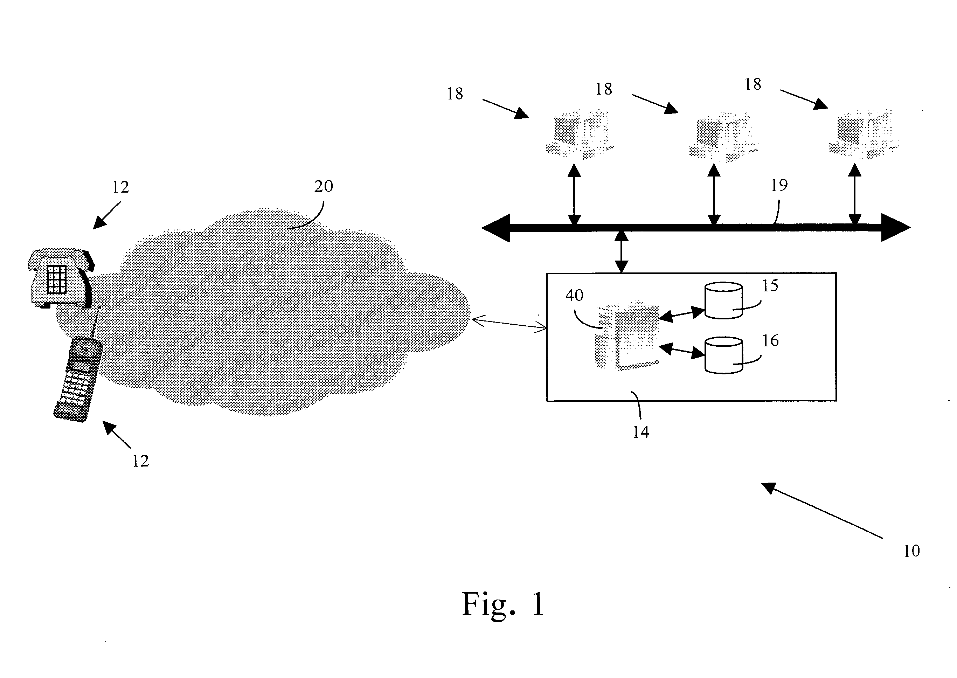

With reference to Fig. 1 a system for managing business flows (system) 10 comprises, for instance, a company server (server) 14, remote terminals (client terminals) 12, connected by means of a telephone network 20, known in themselves, to the server 14, a local or wide area network (network) 19, known in itself, and corporate terminals (terminals) 18, connected through said network 19 to the server 14.

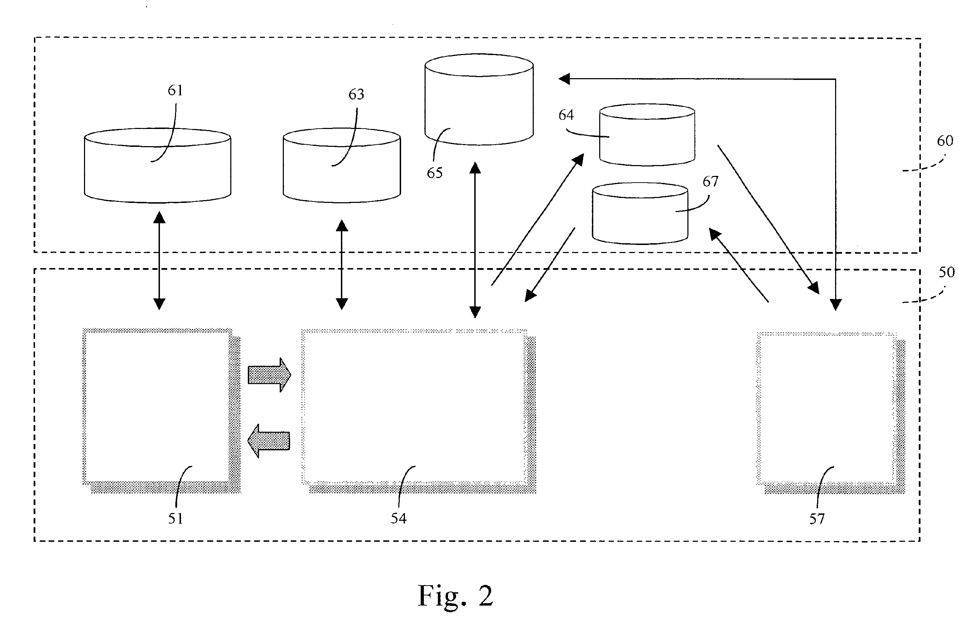

The server 14 comprises a processing unit (processor) 40 and, for instance, connected to the processor 40, a first storage unit 15, able to store programs 50 (Fig.1, Fig.2) developed during the design phase of the system 10, and a second storage unit 16, able to store databases or archives 60 associated to the programs 50 to implement the method according to the invention, as will be described in detail hereafter. The storage units, 15 and 16 respectively, are for instance constituted by one or more hard disk devices, of a known type.

The client terminals 12, known in themselves, are able to allow users of the "client" type the insertion of requests to start new work files.
In particular, the client terminals 12, for instance constituted by cell phones, personal computers, WebPhones or PDA (Personal Digital Assistants), allow to activate and, subsequently, access information about the activated work files.
For instance, the client terminals 12, through a Web interface, the programs 50 and the archives 60, are able to allow the following functions:
- Service request;
- Insertion of identifying data;
- Insertion of attachments;
- Signing the work;
- Insertion of email or cell phone number for notifications by means of messages;
- Request for work completion notifications;
- Requests for notifications for each status change; as will be described in detail hereafter.

The terminals 18, of a known type, for instance constituted by personal computers, are able to allow "employee" types of users to manage work files daily. For instance, said terminals 18 are able to allow to create, modify, cancel work files, to insert notes and attachments, sign and forward the work files to any office in the company. Using, for instance, simple Web interfaces (user interfaces accessible from Internet Browser) the terminals 18 are able to allow functions of:
- Creating the Work File;
- Accepting the Work File;
- Inserting Text Notes;
- Inserting Attachments;
- Inserting the List of corporate offices whereto the work file is to be forwarded;
- Signing the work file;
- Cancelling the work file;
- Releasing the final work file; as will be described in detail hereafter.

The terminals 18 are also able to allow "process manager" types of users to monitor the flows of the work files.
For example, the terminals 18 are able to allow the "process manager" to monitor ongoing flows and to analyse those completed within a certain period, thereby obtaining useful information for process optimisation.
The terminals 18 are also able to allow the "process manager" to consolidate flows making them become consolidated or "formal", as will be described in detail hereafter.
The terminals 18 are also able to allow "process manager" users to modify archives pertaining to the organisational structure of the company, to enable or disable system users or specific functions and to monitor the status of the flows, as shall be described in detail hereafter.

In accordance with the present embodiment, the programs 50, stored in the first storage unit 15 and described by means of known programming techniques, based, for instance, on Lotus Domino environment, XML (eXtensible Markup Language) and Java languages, comprise a customer management module (GECLI module) 51, a flow management module (GEFLU module) 54 and a flow analysis module (ANFLU module) 57.

The archives 60, stored in the second storage unit 16 and, for instance, of the "flat" or relational type, comprise a customer ID archive (customer archive) 61, known in itself, associated to the GECLI module 51, a work file archive 63, known in itself, associated to the module GEFLU 54 and an organisational structure archive (structure archive) 65, known in itself, associated both to the module GEFLU 54 and to the module ANFLU 57, as will be described in detail hereafter.
The archives 60 also comprise an archive of informal flows (informal archive) 64 and an archive of consolidated or formal flows (formal or consolidated archive) 67, associated both to the module GEFLU 54 and to the module ANFLU 57, as will be described in detail hereafter.

The module GECLI 51 is able to manage the interaction between the customer and the company.
In particular, the module GECLI 51 comprises the following basic procedures:
- "Service Request" procedure which, for instance, allows the customer to request a service through a public request form (without access authorisations) comprising fields such as: Name, Surname, address and, for example, a signature button that allows to select an electronic signature mode; naturally, the procedure provides for said information or data to be completed by the customer only the first time he/she accesses the services since the subsequent times the procedure will require only an access identifier; this procedure, after collecting the data from the Customer, is able to store the data collected in the Customer archive 61;
- "Notification Configuration" procedure which, for instance, is able to allow the activation of some event sensors (triggers) to provide asynchronous notifications on the progress of the request, completed work file notifications, notifications for each status change; the procedure allows the customer to complete a public form (without access authorisations) to indicate the means whereby notifications are to be received, for example: email address, cellular telephone number for SMS (Short Message Services) notifications, etc.; said procedure, after collecting the notification data from the customer, is able to store the collected data in the Customer archive 61;
- "Progress status notifications" procedure which, for example, is able to allow the Customer to access status information pertaining to his/her request, according to the information loaded with the "Notification Configuration" procedure; notifications can be of the "asynchronous" or "synchronous" type; in particular, in the case of "asynchronous" notifications the procedure will be able to generate informative notifications via email or SMS; in the case of "synchronous" notifications, the procedure will be able to make available to the customer, upon the customer's request, both some views of current requests, and a telephone number through which the customer will be able to request more detailed status information from an operator; for instance, in the case of "synchronous" notification obtained by means of "Browser", the customer will be required to provide the work file identifier through a form and thereafter a view on current work files relating to the customer will be displayed; in the case of "synchronous" notification obtained by means of telephone, the customer will be required, for instance, to type on the telephone keypad the work file identifier, whereupon the correct status information on the current work file will be provided, for instance, by means of vocal synthesis of the information itself.
The module GECLI 51 also comprises procedures to enable the receipt of notifications, procedures for the automatic generation of request identifiers and for managing said identifiers.
The module GECLI 51, on the basis of the information introduced by the customers is also able to interact with the customer archive 61 and to create and update said archive 61.

The module GEFLU 54 is able to make available to "employee" users the Work File Creation, Cancellation and Management functions storing the information about each current flow in the work file archive 63.

In particular, the module GEFLU 54 is able to allow the "employee" user to verify the status of the customer's requests through synthetic views, representative for example of all current work files, of the files with consolidated flow, of the files with informal or free flow, of the files with mixed flow and of completed files.
The module GEFLU 54 is also able to allow the employee to access individual customer requests and to classify the request defining, for example, the type of flow associated to the work file (consolidated, mixed, informal), type of work file, notes on the work file, messages to be sent to the user, documentation to be attached.

In the case of informal work file flow, the module GEFLU 54, in accordance with the present invention, can enable the "employee" user to associate to the informal work file, respectively:
- an already existing, not yet consolidated type of file;
- defining a new type of file and storing the new type in the informal archive 64;
- compiling the distribution list the work file is to be forwarded to, taking into account the structure archive 65.
The module GEFLU 54 thus enables to manage the work files by means of informal flows in a manner that is transparent to the customer's requirements.

In the case of consolidated work file flow, the module GEFLU 54, in accordance with the present invention, is able automatically to associate to the work file a consolidated work file type already existing in the consolidated archive 57.

In the case of mixed work file flow, the module GEFLU 54, in accordance with the present invention, can enable the "employee" user to associate to the work file a consolidated work file type, to compile, with the aid of the structure archive 65, a distribution list whereto the work file is to be forwarded, including a new list in addition to the predefined list in the consolidated flow, and to store the new type of flow, for instance, in the informal archive 64.
The module GEFLU 54 is thus able to create and control new flows and to associate consolidated flows to new customer requests.

The module ANFLU 57 is able to make available to "process manager" users the functions of flow statistics generation, flow freezing, etc.
For instance, the module ANFLU 57 is able to provide information about the completed flows and to present said information in aggregate fashion in order to allow their analysis.
The module ANFLU 57 is also able to allow the "process manager" user to access all flows completed between a certain date and another and to "freeze" or "consolidate" a flow storing it in the consolidated archive 67, taking into account the structure archive 65.
In accordance with the present invention, the module ANFLU 57 therefore allows to freeze a flow and make it available for use in Work Flow mode to for the GEFLU 54 module in view of new requests that use said flow.

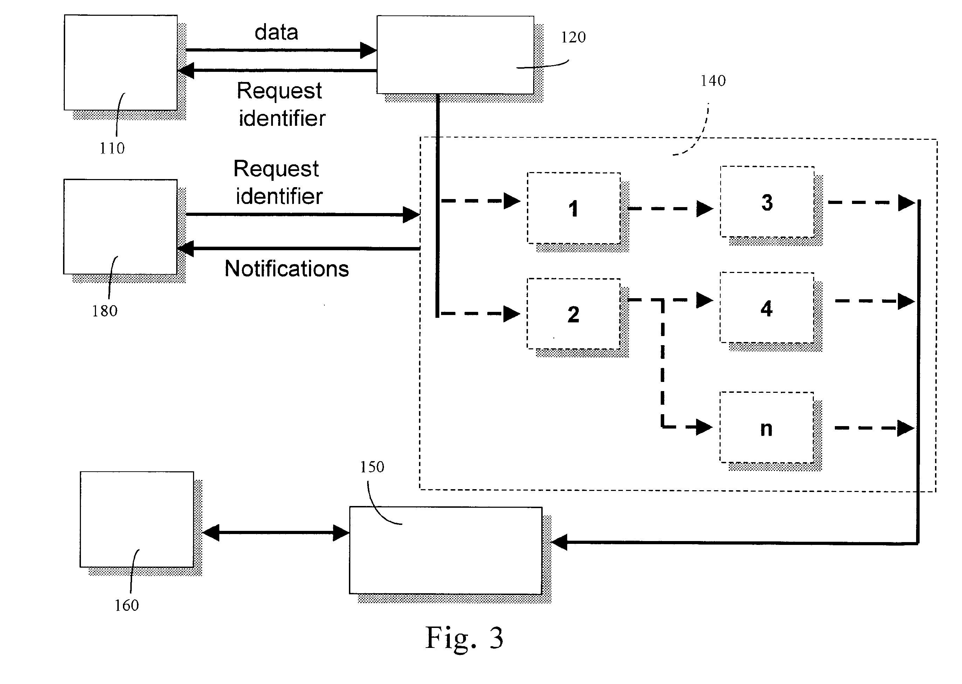

The operation of the system 10 described heretofore is as follows, with reference the flow diagram of Fig. 3.

In a first step (service request) 110 the customer makes a service request by completing, by means of the module GECLI 51 (Fig. 1, Fig. 2, Fig. 3), a request form displayed, for instance, on the customer terminal 12.
Following the request, the module GECLI 51 returns a univocal request identifier to the customer, with which the customer will then be able to ask for the progress status of the request.
During said step 110, the module GECLI 51 updates the customer archive 61, as previously described.

In a second step (analysis and classification) 120, the request is taken up by the module GEFLU 54 that analyses and classifies the request.
In said step 120, the module GEFLU 54 verifies, with the aid of the formal archive 67, either automatically or with the intervention of the "employee" user, whether a consolidated flow already exists to handle said request or whether an informal flow needs to be initiated to handle it.

In the case of consolidated or standard flow, during the step 120, the module GEFLU 54 classifies the request with the code identified for said flow in the formal archive 67 and forwards the work file to the competent or cognisant offices according to a typical Work Flow procedure and on the basis of the identified formal flow.

In the case of informal flow, during the step 120 the module GEFLU 54 defines a new code to classify the request (for example: Goods Purchase, Bid Preparation, etc.), creates a new informal flow defining to which competent offices the file is to be sent for the execution of the subsequent activity steps, and stores the competent office or node associated with the first activity step on the informal archive 64, tracking:
- type of work file;
- date/time of acceptance;
- type of activity;
- office involved in the activity.
Therefore, in the case of informal flow, the module GEFLU 54 forwards the work file directly to the first cognisant office or node according to the flow defined by the "employee" user.

At the end of the step 120, both in the case of formal and informal flow, there will be at least one node with information about:
- type of work file;
- date/time of acceptance;
- type of activity;
- office involved in the activity;
- distribution list (for example: office 1, office 2, etc.) ;
- date/time of forwarding.

In a fourth step (management) 140, the nodes (1, 2, 3, 4, n) manage, by means of the terminals 18 and of the module GEFLU 54, the work files forwarded according to procedures which depend on whether the flow is a formal or an informal one.

In the case of formal flow, each node:
- accepts the work file;
- reads the notes that the module GEFLU 54 proposes for the execution of the activity;
- executes the activity under its cognisance;
- inserts any descriptions of the activities performed, for instance, if they are different from those proposed by the module GEFLU 54;
- forwards the work file to the subsequent node, automatically, according to the flow defined in the step 120.
In this case, the module GEFLU 54 in automatic fashion and applying the predefined flow in the formal archive 67, sends the work file to the cognisant offices in a manner equivalent to a known Work Flow tool.

In the case of informal flow, each node:
- accepts the file;
- defines the type of activity to be performed (for instance: review, signature, purchase, etc.);
- performs the activities whereon it has cognisance;
- inserts the description of the activities performed;
- forwards the work file, according to the information stored in the structure archive 65, to the cognisant office(s) that need to be involved in the subsequent step, adding to the node also the information about the distribution list created and on the date/time of forwarding;
- as the case may be, it may pass the file to the Customer Desk if it deems it appropriate not to activate any other offices as a result of the activity performed.
In the case of informal flow, moreover, for each acceptance, the module GEFLU 54 creates a new informal flow node on the informal archive 64, storing:
- date/time of acceptance;
- type of activity;
- office involved in the activity.

In a fifth step (work file closure) 150, irrespective of whether the flows are formal or informal, the file is closed and filed in the file archive 64 with, for instance, the following information:
- date/time of acceptance;
- date/time of file closure;
- type of activity;
- offices involved in the activities.

In the case of informal flow, moreover, the module GEFLU 54, creates a new informal flow node on the informal archive 64 storing, for instance:
- date/time of work file acceptance;
- date/time of work file closure;
- type of activities carried out;
- offices involved in the activities.

In view of the steps heretofore described it is clear that, using the method according to the invention, which provides for a single integrated tool, it is possible both to monitor and store new flows, and to monitor consolidated flows.

In accordance with the present embodiment, further steps are also provided to complete the method according to the invention.

In particular, in accordance with the present invention, an observation and consolidation (tracking and consolidation) step 160 is provided, to allow the "process manager" user to analyse and consolidate informal files.
During said step 160 the informal flows are placed under observation for an interval deemed "reasonable" and the related data are collected.
At the end of said "reasonable" interval, the "process manager" user can access the informal archive 67, through the module ANFLU 57, and download, for instance, locally on the terminal 18 all the data necessary to analyse the flows initiated and concluded during the interval.
The module ANFLU 57 helps in displaying, on the terminal 18, graphs that represent the generated flows, in order to enable to identify a process that is best suited to manage the type of flow analysed.
At the end of the analysis the "process manager" user can decide whether a certain flow is to be considered "consolidated" or "standard" and, consequently, to store the flow on the formal archive 67 so that the identified flow is used by the module GEFLU 54 as a standard flow.

In accordance with the present invention, a query (progress report status) step 180 is provided in which the "customer" user can, through the customer terminal 12 and the module GECLI 51, at any time during the processing of the file, request, through the file identifier, information such as:
- office that is handling the file;
- communications by the office (for instance: send new documentation, etc.)
- date/time of work acceptance by the office that handles the file.
   Through said step 180, the user can access said information using a customer terminal 12 provided, for instance, with a known Web Browser, or with WAP access.
   Naturally, the access modes possible during said step 180, thanks to the high flexibility of the system and of the method according to the invention, can be of different kinds.

For example, in an additional embodiment, it will be possible to query the status of the work file(s) by means of a voice recognition system opportunely provided in the module GECLI 51 to facilitate access to the information by means of telephone sets. In this case, the work file identifier can be expressed by the customer vocally and, by means of known voice recognition and synthesis functions, made available by the module GECLI 51, be interpreted and handled in such a way as to communicate to the client, through synthesised voice messages in reply, the information about the progress of the file(s).

The present embodiment was described defining user functions of the "customer", "employee", and "process manager" type.
Naturally, the definitions introduced herein are only representative of distinct functions, which may be integrated and identified either within a single corporate context or in mixed contexts, external and internal to the company, without thereby modifying the aims of the invention as claimed.

Obvious modifications or variations are possible to the above description, in the dimensions, shapes, materials, components, circuit elements, connections and contacts, as well as in the details of the circuitry and of the construction illustrated herein and of the method of operation, without thereby departing from the spirit of the invention as specified in the claims that follow.

## Claims

1. System for managing work files with business processes comprising
- activation means (12, 51) able to load and activate a work file;
**characterised by**
- analysing means (18, 54) able to analyse said work file and to selectively identify a new business process to associate to said work file;
- memory means (64) associated to said work file analysis means (18, 54) and able to store said new business process as a new informal process.

2. System as claimed in claim 1, **characterised in that**
- said analysing means (18, 54) are also able to selectively identify a predetermined business process to be associated to said work file.

3. System as claimed in claim 1, **characterised in that**
- said activation means (12, 51) comprise
- customer terminals (12) able to activate said work file by means of pre-defined forms; and
- processing modules (51) associated to said customer terminals (12) by means of a communications network.

4. System as claimed in claim 1, **characterised in that**
- said analysing means (18, 54) comprise
- terminals (18) able to analyse said work file and to identify at least a first corporate node able to manage said work file by means of said new informal process; and
- processing modules (54) able to transfer said work file to said first corporate node and to store information associated to said first corporate node in said memory means (64).

5. System as claimed in claim 1, **characterised by**
- new processes analysing means (18, 54) able to analyse the new informal processes memorised in said memory means (54) and to convert said new informal processes into predetermined business processes.

6. System as claimed in claim 1, 2 or 3 **characterised by**
- interaction means (12, 14, 51) able to selectively interact with said business processes, by transmitting and receiving information about a determined work file.

7. System as claimed in claim 6, **characterised in that** said interaction means (12, 14, 51) comprise
- devices able to transmit and/or receive said information by means of voice messages.

8. Method for managing work files with business processes, comprising the steps of
- requesting (110) a service by means of a work file;
**characterised by** the steps of
- analysing (120) said service and selectively identifying a new business process to be associated to the service;
- storing (120) said new business process as a new informal process associated to said service as requested.

9. Method as claimed in claim 8 **characterised in that** said analysing step (120) further comprises the step of
- selectively identifying a predetermined business process to be associated to said service as requested.

10. Method as claimed in claim 8 **characterised by** the additional steps of
- analysing (160) the new informal processes;
- selectively converting (160) said new informal processes into predetermined business processes.

11. Method as claimed in claim 8 **characterised by** the additional step of
- selectively interacting (180) with said business processes by transmitting and receiving information about a determined work file through terminals and a communications network.

12. Method as claimed in claim 11 **characterised in that** said step of selectively interacting (180) comprises the step of
- transmitting said information about said determined work file through voice commands; and/or
- receiving said information about said determined work file through voice commands.
